# EUROPEAN PATENT SPECIFICATION

(11) **EP 2 214 894 B1**
(45) Date of publication and mention of the grant of the patent: **25.02.2015**
(21) Application number: 08843362.8
(22) Date of filing: 29.10.2008
(51) Int. Cl.: B29D 11/00, B65B 25/00

(54) **ADDITIVE SALINE DOSING SYSTEM AND METHOD FOR CONTACT LENS PACKAGING**
ADDITIVSALZLÖSUNGSDOSIERSYSTEM UND VERFAHREN ZUR VERPACKUNG VON KONTAKTLINSEN
SYSTÈME DE DOSAGE D'ADDITIF ET DE SOLUTION SALINE ET PROCÉDÉ POUR UN CONDITIONNEMENT DE LENTILLE DE CONTACT

(30) Priority: 31.10.2007 US 984129 P
(43) Date of publication of application: 11.08.2010
(73) Proprietor: Novartis AG, 4056 Basel (CH)
(72) Inventor: GAULT, Scott, J., Norcross Georgia 30093 (US); GROTHE, Kent, M., Buford Georgia 30518 (US)
(74) Representative: Bohest AG
(86) International application number: PCT/US2008/081530
(87) International publication number: WO 2009/058822

(56) References cited:
- EP-A- 0 741 079
- EP-A- 0 811 474
- EP-A- 0 824 063
- EP-A- 1 048 443
- WO-A-2005/011966

## Description

The present invention relates generally to the packaging of ophthalmic contact lenses and, more specifically, to promoting good sealing of the contact lens package.

### Description of the Related Art

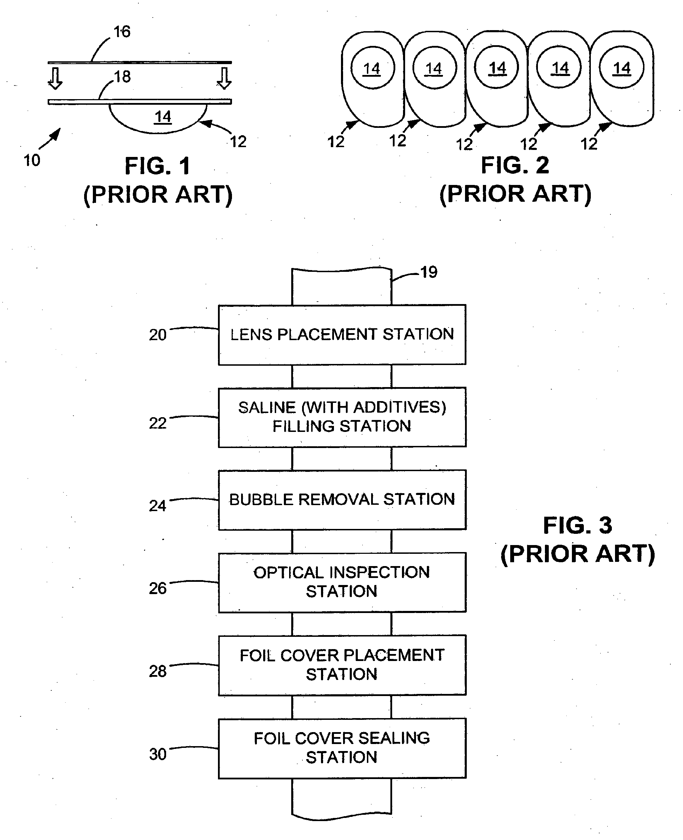

Hydrophilic ophthalmic contact lenses are commonly packaged in individual primary containment packages, generally known as "blister packages" or "blister packs." As shown in **Fig. 1****,** a blister package 10 generally consists of a plastic (e.g., polypropylene) shell 12 having a concave or bowl-shaped depression or cavity 14 in which a lens (not shown) is disposed immersed in a sterile aqueous (saline) solution and sealed with a laminate foil cover 16. A flat rim 18 surrounds the cavity 14. (Shells 12 may include additional features to aid use and handling of the blister package 10, but they are not shown for purposes of clarity.) As illustrated in **Fig. 2****,** blister packages 10 are generally manufactured in strips comprising a number, such as five, of adjoining blister packages 10 that a user can easily separate by snapping them apart from one another. Such packaging keeps the lens in a hydrated and sterile state before being opened and worn by a user. Often, a lens is contained within a blister package for a significant amount of time while the lens is being shipped and held in storage before use. Therefore, it is important that the saline solution be hermetically sealed therein, to ensure that the solution cannot leak out and to prevent contaminants from entering the lens containment area.

The stations of a conventional contact lens packaging line are illustrated generally in **Fig. 3****.** Strips of the shells 12 (e.g., five shells) are carried in carrier trays (not shown), which are moved from one station to the next by a conveyor 19. For purposes of clarity, however, the packaging process is described herein with respect to only a single lens and its package. At station 20, a contact lens (not shown) is placed into a shell cavity 14 **(****Figs. 1-2****).** Shell 12 is then conveyed to a station 22 which fills cavity 14 with an amount of saline solution sufficient to ensure the lens is immersed. The saline solution contains, in addition to water and sodium chloride, one or more additives, such as buffers and lubricating agents. The filled shell 12 is then conveyed to a station 24 that uses ultrasonic vibration to remove any bubbles in the solution, as such bubbles could interfere with optical inspection of the lenses at the next station 26. At station 26, the lens is optically inspected by imaging the lens using a camera and image-processing equipment (not shown). The shell is then conveyed to a station 28 that places a foil cover 16 on it. Shell 12 then arrives at a station 30 that seals foil cover 16 to rim 18. In one conventional method of sealing foil cover 16, a heating element or heated seal plate presses foil cover 16 against rim 18 to heat-seal cover 16 to shell 12 to form the completed blister package 10.

Undesirable conditions during sealing can sometimes give rise to a poor, i.e., non-hermetic, seal between foil cover 16 and the shell 12. For example, saline droplets can sometimes undesirably splash upon rim 18 during the step of the packaging process (e.g., station 22) at which cavity 14 is filled with saline solution. When shell 12 is subsequently sealed with foil cover 16 (e.g., at station 30), such droplets can create wrinkles in foil cover 16 and/or otherwise prevent foil cover 16 from properly adhering to shell 12, giving rise to undesired channels or pathways between foil cover 16 and cavity 14 that can permit the saline solution to leak out or contaminants to infiltrate cavity 14 and contaminate the lens. Saline solutions having certain additives included therein have been found to interfere with proper sealing to a significantly greater extent than would pure saline without those additives, when present in the sealing area.

WO 2005/011966 A1 discloses a method and a system according to the preamble of the independent claim of the respective category.

Accordingly, needs exist for improvements to contact lens packaging systems that promote good, i.e., hermetic, seals between the cover and plastic shell of a blister package. The present invention is directed to these needs and others in the manner described below.

### SUMMARY

The present invention relates to a method for dosing saline solution with an additive during contact lens packaging as it is specified by the features of the independent method claim. Embodiments of the method according to the invention are specified by the features of the dependent method claims. The present invention further relates to a system for packaging contact lenses as it is specified by the features of the independent claim directed to a system. Embodiments of the system according to the invention are specified by the dependent claims directed to the system.

These and other aspects, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of embodiments of the invention are exemplary and explanatory only, and are not restrictive of the invention, as claimed.

### BRIEF DESCRIPTION OF THE DRAWINGS

**Figure 1** is a side elevation view of a blister pack, in accordance with known art, showing the foil cover over the rim of the shell.
**Figure 2** is a top view of a strip of blister pack shells, in accordance with known art.
**Figure 3** illustrates a plurality of stations of a contact lens packaging line, in accordance with known art.
**Figure 4** illustrates a plurality of stations of a contact lens packaging line, in accordance with an exemplary embodiment of the present invention.
**Figure 5** illustrates in further detail the saline dispensing station of the contact lens packaging line of **Fig. 4****.**
**Figure 6** illustrates in further detail the additive dosing station of the contact lens packaging line of **Fig. 4****.**

### DETAILED DESCRIPTION OF EXEMPLARY EMBODIMENTS

The present invention may be understood more readily by reference to the following detailed description of the invention taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention.

Also, as used in this specification ("herein") including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment. With regard to specific combinations of elements described herein, such elements can alternatively be combined in any other suitable manner with each other or with still other elements, and some elements can be omitted, or portions of the elements combined together with portions of other elements to form elements that differ from those specifically described. With regard to specific method steps described herein, unless otherwise stated, the steps can alternatively be performed in sequences other than those specifically described, and some steps can be omitted, or portions of the steps combined together to form steps that differ from those specifically described. Persons skilled in the art to which the invention relates will appreciate that the invention encompasses such alternatives.

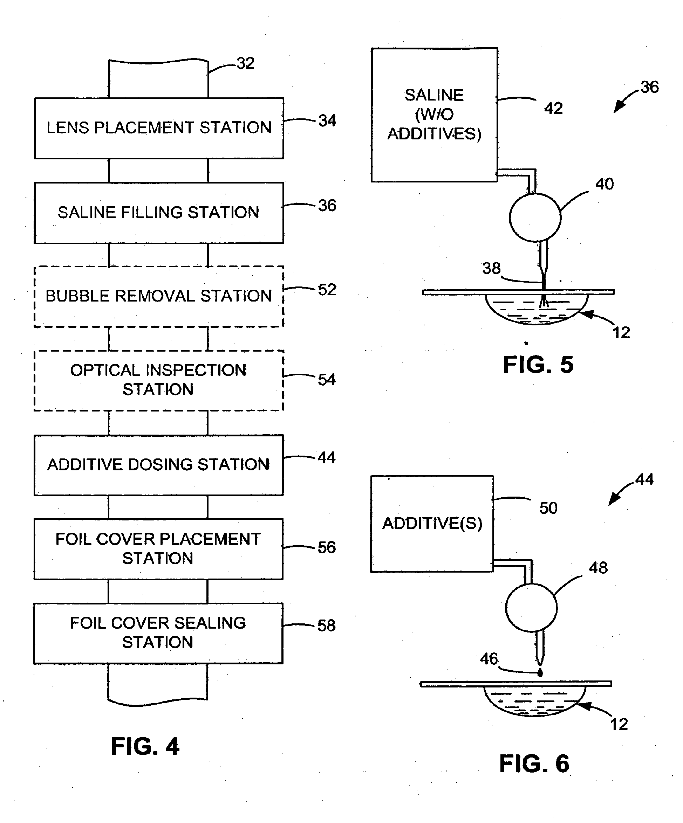

The stations of a contact lens packaging line in accordance with an exemplary embodiment of the present invention are illustrated generally in **Fig. 4****.** A conveyor system 32 moves the contact lens shells 12 (**Fig.1**) in carrier trays (not shown for purposes of clarity) from station to station. Conveyor system 32 can include various types of devices and is not limited to a single conveyor belt or other single device. The trays can be of conventional design and carry strips (**Fig. 2**) of shells 12 in the conventional manner. The packaging line can operate in a continuous or indexed manner, with successive shells 12 carried by conveyor system 32 arriving at the stations and successively undergoing the process steps or operations described herein. For purposes of clarity, however, the process is described herein with respect to only a single shell 12.

Conveyor system 32 delivers a shell 12 to a lens placement station 34. Station 34 places a contact lens (not shown) into the cavity of shell 12 in any conventional manner. Conveyor system 32 then delivers the shell 12 to a saline dispensing station 36. In alternate embodiments, the saline is dispensed into the shell prior to lens transfer. Station 36, shown in further detail in **Fig. 5****,** fills the cavity of shell 12 with a metered amount of saline solution 38. Saline solution 38 preferably has no additives, i.e., it consists essentially of an aqueous sodium chloride solution; or includes additives that do not significantly interfere with sealing of the cover, but does not include one or more specified additives that may interfere with sealing and therefore are to be separately dosed. Filling is controlled by a suitable metering controller 40 that can comprise any suitable combination and arrangement pumps, valves, pipette droppers, or similar devices as known in the art. Controller 40 controls the flow or movement of saline solution 38 from a saline supply tank or reservoir 42 in which it is stored, to the cavity of shell 12, as shown in **Fig. 5****.**

Conveyor system 32 subsequently delivers the shell 12 to an additive filling (or "dosing") station 44. Station 44, shown in further detail in **Fig. 6****,** doses the cavity of shell 12 with a metered amount of one or more additives 46. The additive is typically provided in liquid form, but alternatively may be in solid, powdered, gel or other form. Dosing is controlled by a suitable metering controller 48 that can comprise any suitable combination and arrangement of pumps, valves, pipette droppers, dosing needles, or similar devices as known in the art. Controller 48 controls the flow or movement of additives 46 from an additive supply tank or reservoir 50 in which it is stored, to the cavity of shell 12, as shown in **Fig. 6****.** As the amount of additives 46 introduced into the cavity of shell 12 is small relative to the amount of bulk saline dispensed into the shell (in some instances, for example, only a droplet or two of additive per lens package, typically less than about 50%, less than about 35%, less than about 25%, less than about 10%, less than about 5%, or less than about 1 % the volume of the bulk saline), the introduction is more precisely controllable and therefore less likely to result in additive splashing on the rim of shell 12. In embodiments of the invention providing equal cycle time for the additive dosing operation(s) and the saline dispensing operation, the delivery rate of additive(s) is generally reduced in proportion to the additive-to-saline ratio. As a result, separate dosing of the additive(s) allows delivery at a lower and more controlled delivery flow-rate, without slowing down the overall packaging process. In alternate embodiments of the invention, two or more dosing stations are included for separate delivery of different additives, and/or a single dosing station delivers one or more different additives either separately or in combination with one another. Also, the present invention includes systems and methods wherein one or more dosing station(s) deliver additive(s) to a lens package before, after, and/or simultaneously with the separate delivery of bulk saline not including said additive(s) to the lens package. The saline and/or the additive(s) can be delivered into the lens package before, after, or along with the contact lens.

The conveyor system 32 optionally delivers the lens packaging shell 12 through further processing stations, as shown in broken lines in **Fig. 4****.** As these stations are conventional and thus well-understood in the art, they are not described in detail herein. The processing stations optionally include a bubble-removal station 52 that uses ultrasonic vibration to remove any bubbles in the solution, as such bubbles could interfere with optical inspection of the lenses and/or the packages. The lens and/or the package is optionally inspected at an in-package inspection station 54 by imaging the lens using a camera and image-processing equipment (not shown). These and/or other optional additional processing stations may be positioned upstream and/or downstream from the dosing station 44.

Shell 12 is then conveyed to a cover placement station 56 that places foil laminate cover 16 **(****Fig. 1****)** on it. The covered shell 12 then arrives at a closure and sealing station 58 that seals the foil laminate cover 16 to the rim of shell 12 using a heated seal plate or other suitable means as known in the art. Improved seal integrity is provided as a result of the reduced likelihood that seal-interfering additives were present in the seal area on the rim of the shell 12 during the closure and sealing step of the packaging process.

While the invention has been described with reference to preferred and example embodiments, it will be understood by those skilled in the art that a variety of modifications, additions and deletions are within the scope of the invention, as defined by the following claims.

## Claims

1. A method for dosing saline solution (38) with an additive (46) during contact lens packaging, comprising:
introducing saline solution (38) into a contact lens package (12), the saline solution (38) not containing a specified additive (46); and
simultaneously introducing the specified additive (46) into the contact lens package (12) to combine the specified additive (46) with the saline solution (38) in the contact lens package (12)
**characterized in that** the saline solution (38) is introduced into the contact lens package (12) separately from the specified additive (46).

2. The method of Claim 1, further comprising depositing a contact lens into the contact lens package (12).

3. The method of Claim 2, wherein the saline solution (38) and the specified additive (46) are introduced after the contact lens is deposited into the contact lens package (12).

4. The method of Claim 1, wherein the saline solution (38) is introduced at a first delivery rate, and the specified additive (46) is introduced at a second delivery rate that is no more than 35% the first delivery rate.

5. The method of Claim 1, wherein the saline solution (38) is introduced at a first delivery rate, and the specified additive (46) is introduced at a second delivery rate that is no more than 10% the first delivery rate.

6. The method of Claim 1, wherein the saline solution (38) is introduced at a first delivery rate, and the specified additive (46) is introduced at a second delivery rate that is no more than 1% the first delivery rate.

7. A system for packaging contact lenses, said system comprising:
a conveyor (32) for moving contact lens packages (12) along a contact lens packaging line;
a lens delivery station (34) for placement of contact lenses in the contact lens packages (12);
a saline dispensing station (36) for delivering saline solution (38) not having a specified additive (46) therein into the contact lens packages (12);
an additive dosing station (44) for delivering the specified additive (46) into the contact lens packages (12) simultaneously with the saline solution (38), without depositing the specified additive (46) onto a seal area of the contact lens packages (12); and
a sealing station (58) for hermetically sealing a cover onto the seal area of each of the contact lens packages (12),
**characterized in that** the saline dispensing station (36) for delivering the saline solution (38) into the contact lens package (12) is separate from the additive dosing station (44) for delivering the specified additive (46) into the contact lens package (12).

8. The system of Claim 7, further comprising an inspection station (54) for inspecting the contact lenses in the contact lens packages (12).

9. The system of Claim 7, wherein the saline solution (38) and the specified additive (46) are dosed into the contact lens packages (12) after the contact lenses are placed in the contact lens packages (12).

10. The system of Claim 7, wherein the saline dispensing station (36) dispenses saline solution (38) at a first delivery rate, and wherein the additive dosing station (44) doses the specified additive (46) at a second delivery rate that is no more than 10% the first delivery rate.

## Patentansprüche

1. Verfahren zum Dosieren einer Salzlösung (38) mit einem Zusatzstoff (46) während des Verpackens von Kontaktlinsen, wobei das Verfahren umfasst:
Einbringen von Salzlösung (38) in eine Kontaktlinsenverpackung (12), wobei die Salzlösung (38) einen spezifizierten Zusatzstoff (46) nicht enthält; und
gleichzeitiges Einbringen des spezifizierten Zusatzstoffes (46) in die Kontaktlinsenverpackung (12), um den spezifizierten Zusatzstoff (46) mit der Salzlösung (38) in der Kontaktlinsenverpackung (12) zu vereinen,
**dadurch gekennzeichnet, dass** die Salzlösung (38) getrennt von dem spezifizierten Zusatzstoff (46) in die Kontaktlinsenverpackung (12) eingebracht wird.

2. Verfahren nach Anspruch 1, zusätzlich umfassend das Ablegen einer Kontaktlinse in die Kontaktlinsenverpackung (12).

3. Verfahren nach Anspruch 2, wobei die Salzlösung (38) und der spezifizierte Zusatzstoff (46) eingebracht werden, nachdem die Kontaktlinse in der Kontaktlinsenverpackung (12) abgelegt ist.

4. Verfahren nach Anspruch 1, wobei die Salzlösung (38) mit einer ersten Zuführgeschwindigkeit eingebracht wird, und der spezifizierte Zusatzstoff (46) mit einer zweiten Zuführgeschwindigkeit eingebracht wird, die nicht mehr als 35% der ersten Zuführgeschwindigkeit beträgt.

5. Verfahren nach Anspruch 1, wobei die Salzlösung (38) mit einer ersten Zuführgeschwindigkeit eingebracht wird, und der spezifizierte Zusatzstoff (46) mit einer zweiten Zuführgeschwindigkeit eingebracht wird, die nicht mehr als 10% der ersten Zuführgeschwindigkeit beträgt.

6. Verfahren nach Anspruch 1, wobei die Salzlösung (38) mit einer ersten Zuführgeschwindigkeit eingebracht wird, und der spezifizierte Zusatzstoff (46) mit einer zweiten Zuführgeschwindigkeit eingebracht wird, die nicht mehr als 1% der ersten Zuführgeschwindigkeit beträgt.

7. Anlage zum Verpacken von Kontaktlinsen, wobei die Anlage umfasst:
ein Fördermittel (32) zum Bewegen von Kontaktlinsenverpackungen (12) entlang einer Kontaktlinsenverpackungslinie;
eine Linsenzuführstation(34) zur Platzierung von Kontaktlinsen in den Kontaktlinsenverpackungen (12);
eine Salzlösungsabgabestation (36) zum Zuführen von Salzlösung (38) in die Kontaktlinsenverpackungen (12), wobei die Salzlösung (38) einen spezifizierten Zusatzstoff (46) nicht enthält;
eine Zusatzstoffdosierstation (44) zum Zuführen des spezifizierten Zusatzstoffes (46) in die Kontaktlinsenverpackungen (12) gleichzeitig mit der Salzlösung (38), ohne dass der spezifizierte Zusatzstoff (46) auf die Siegelfläche der Kontaktlinsenverpackungen (12) aufgetragen wird; und
eine Siegelstation (58) zum hermetischen Aufsiegeln einer Abdeckung auf die Siegelfläche jeder der Kontaktlinsenverpackungen (12),
**dadurch gekennzeichnet, dass** die Salzlösungsabgabestation (36) zum Zuführen der Salzlösung (38) in die Kontaktlinsenverpackung (12) von der Zusatzstoffdosierstation (44) zum Zuführen des spezifizierten Zusatzstoffes (46) in die Kontaktlinsenverpackung (12) getrennt ist.

8. Vorrichtung nach Anspruch 7, zusätzlich umfassend eine Inspektionsstation (54) zum Inspizieren der Kontaktlinsen in den Kontaktlinsenverpackungen (12).

9. Vorrichtung nach Anspruch 7, wobei die Salzlösung (38) und der spezifizierte Zusatzstoff (46) in die Kontaktlinsenverpackungen (12) dosiert werden, nachdem die Kontaktlinsen in den Kontaktlinsenverpackungen (12) platziert sind.

10. Vorrichtung nach Anspruch 7, wobei die Salzlösungsabgabestation (36) Salzlösung (38) mit einer ersten Zuführgeschwindigkeit abgibt, und wobei die Zusatzstoffdosierstation (44) den spezifizierten Zusatzstoff (46) mit einer zweiten Zuführgeschwindigkeit dosiert, die nicht mehr als 10% der ersten Zuführgeschwindigkeit beträgt.

## Revendications

1. Procédé pour le dosage d'une solution saline (38) avec un additif (46) lors de l'emballage de lentilles de contact, comprenant :
introduire une solution saline (38) dans un emballage de lentilles de contact (12), la solution saline (38) ne contenant pas un additif spécifié (46) ; et
introduire simultanément de l'additif spécifié (46) dans l'emballage de lentilles de contact (12) afin de combiner l'additif spécifié (46) avec la solution saline (38) dans l'emballage de lentilles de contact (12),
**caractérisé en ce que** la solution saline (38) est introduite dans l'emballage de lentille de contact (12) séparément de l'additif spécifié (46).

2. Procédé selon la revendication 1, comprenant en outre le dépôt d'une lentille de contact dans l'emballage de lentilles de contact (12).

3. Procédé selon la revendication 2, dans lequel la solution saline (38) ainsi que l'additif spécifié (46) sont introduits après que la lentille de contact est déposée dans l'emballage de lentilles de contact (12).

4. Procédé selon la revendication 1, dans lequel la solution saline (38) est introduite à une première vitesse d'introduction, et de l'additif spécifié (46) est introduit à une seconde vitesse d'introduction qui n'est pas plus que 35% de la première vitesse d'introduction.

5. Procédé selon la revendication 1, dans lequel la solution saline (38) est introduite à une première vitesse d'introduction, et de l'additif spécifié (46) est introduit à une seconde vitesse d'introduction qui n'est pas plus que 10% de la première vitesse d'introduction.

6. Procédé selon la revendication 1, dans lequel la solution saline (38) est introduite à une première vitesse d'introduction, et de l'additif spécifié (46) est introduit à une seconde vitesse d'introduction qui n'est pas plus que 1% de la première vitesse d'introduction.

7. Un système d'emballage de lentilles de contact, ledit système comprenant:
un convoyeur (32) pour déplacer des emballages de lentilles de contact (12) le long d'une ligne d'emballage de lentilles de contact;
une station de distribution de lentilles (34) pour le placement de lentilles de contact dans les emballages de lentilles de contact (12);
une station de distribution saline (36) pour distribuer une solution saline (38) ne contenant pas d'additif spécifié (46) dans les emballages de lentilles de contact (12);
une station de dosage d'additif (44) pour distribuer l'additif spécifié (46) dans les emballages de lentilles de contact (12) simultanément avec la solution saline (38), sans déposer l'additif spécifié (46) sur une zone de scellage des emballages de lentilles de contact (12); et
une station de scellage (58) pour sceller hermétiquement un couvercle sur la zone de scellage de chacun des emballages de lentilles de contact (12),
**caractérisé en ce que** la station de distribution saline (36) pour distribuer la solution saline (38) dans les emballages de lentilles de contact (12) est séparée de la station de distribution d'additif (44) pour distribuer l'additif spécifié (46) dans l'emballages de lentilles de contact (12).

8. Système selon la revendication 7, comprenant en outre une station d'inspection (54) pour inspecter les lentilles de contact dans les emballages de lentilles de contact (12).

9. Système selon la revendication 7, dans lequel la solution saline (38) et l'additif spécifié (46) sont dosés dans les emballages de lentilles de contact (12) après que les lentilles de contact sont placées dans les emballages de lentilles de contact (12).

10. Système selon la revendication 7, dans lequel la station de distribution saline (36) introduit de la solution saline (38) à une première vitesse d'introduction, et dans lequel la station de distribution d'additif (44) introduit l'additif spécifié (46) à une seconde vitesse d'introduction qui n'est pas plus que 10% de la première vitesse d'introduction.
